# FASCICULE DE BREVET EUROPEEN

(11) **EP 1 881 206 B1**
(45) Date de publication et mention de la délivrance du brevet: **11.03.2009**
(21) Numéro de dépôt: 07110044.0
(22) Date de dépôt: 12.06.2007
(51) Int. Cl.: F16B 2/06, F16B 5/06, F16B 21/07

(54) **Pièce de liaison pour le positionnement d'une patte dans un logement**
Verbindungsstück zur Anordnung einer Lasche in einem Gehäuse
Linking part for positioning a tab in a housing

(30) Priorité: 26.06.2006 FR 0652639
(43) Date de publication de la demande: 23.01.2008
(73) Titulaire: Grosfillex SAS, 01107 Oyonnax (FR)
(72) Inventeur: Martins, José, 01100 Oyonnax (FR); Robert, Noël, 01250 Montagnat (FR)
(74) Mandataire: Intes, Didier Gérard André

(56) Documents cités:
- EP-A2- 1 496 270
- GB-A- 2 167 799

## Description

La présente invention concerne une pièce de liaison pour le positionnement d'une patte dans un logement selon le préambule de la revendication 1. Une telle pièce est décrite dans le document EP-A2-1 496 270.

De manière générale, la patte est liée à un objet que l'on souhaite positionner par rapport au logement.

En particulier, l'invention se rapporte au domaine du montage des volets roulants et, plus précisément, au positionnement d'un volet roulant par rapport à des glissières latérales dans lesquelles coulisse le tablier du volet. Dans ce cas, la patte de liaison est reliée à une partie fixe du volet roulant (par exemple une partie fixe d'un palier), et le logement est ménagé dans une glissière.

Pour une telle application, deux glissières sont normalement prévues, respectivement à chacune des extrémités du volet roulant. Ainsi, deux pattes de liaison, solidaires chacune d'un palier situé à une extrémité du volet roulant sont prévues pour s'engager dans des logements ménagés aux extrémités hautes des glissières. Normalement, l'insertion correcte des pattes dans les logements doit suffire à positionner le volet roulant, avec son tablier, son axe, ses paliers et son coffrage au-dessus des glissières. Toutefois, il existe parfois un jeu entre les pattes et les logements dans lesquelles elles sont insérées, de sorte que le volet roulant peut légèrement basculer par rapport aux glissières, ou être mal positionné par rapport à ce dernier. Il peut en résulter, d'une part, un défaut de guidage des lames du tablier dans les glissières, nuisible au bon fonctionnement du volet roulant, pour sa montée ou sa descente et, d'autre part, des efforts localement importants, susceptibles de provoquer une usure prématurée de certaines pièces du volet roulant.

Le jeu est dû au fait que les pattes et le logement (par exemple ménagé dans les glissières précitées) sont fabriqués avec des procédés qui ne permettent pas de garantir des tolérances de fabrication étroites.

L'invention a pour but de proposer une pièce de liaison qui favorise le positionnement d'une patte dans un logement, sensiblement sans jeu. En particulier, dans son application au montage d'un volet roulant, l'invention vise à considérablement limiter les risques de mauvais positionnement du dispositif de volet roulant par rapport aux glissières.

Ce but est atteint avec la pièce de liaison selon l'invention grâce au fait qu'elle comporte une base dont au moins un côté est élastiquement déformable pour faire varier la longueur et/ou la largeur de ladite base, ainsi que des moyens de fixation de la base avec la tête de la patte.

On comprend que la base de la pièce est fixée à la tête de la patte, laquelle est insérée dans le logement. Grâce à son ou ses côtés élastiquement déformables, la base peut s'adapter aux dimensions transversales du logement, par les variations possibles de sa longueur ou de sa largeur. En particulier, s'agissant du montage d'un volet roulant, les deux pattes de liaison peuvent ainsi être correctement adaptées aux dimensions transversales des glissières dans lesquelles elles sont insérées, pour éviter ou au moins limiter considérablement les possibles basculements du dispositif de volet porté de cette manière.

Avantageusement, les moyens de fixation comprennent une agrafe, faisant saillie sur une des faces de la base et apte à coopérer par encliquetage avec un perçage de la tête.

Ainsi, la pièce de liaison est fixée de manière très simple sur la tête de la patte.

Avantageusement, la base présente un côté déformable comprenant une barrette externe reliée au corps de la base par au moins une liaison pliable.

Avantageusement, la base présente au moins une lumière longeant l'un de ses côtés.

Avantageusement, la pièce de liaison est réalisée en une seule pièce, par injection de matière plastique.

On comprend que la pièce de liaison selon l'invention fait avantageusement partie d'un dispositif de montage d'un objet à l'entrée d'un logement, comprenant une patte, solidaire dudit objet et apte à être insérée dans le logement. Ce dispositif comporte la pièce de liaison selon l'invention, qui est apte à être fixée à la patte par les moyens de fixation de sa base, la longueur et/ou la largeur de ladite base pouvant être modifiée par une déformation dudit au moins un côté déformable de telle sorte que ce côté, ainsi qu'un côté opposé soient chacun en appui contre une paroi du logement.

Plus précisément, comme indiqué précédemment, l'invention s'applique au montage d'un volet roulant dans une embrasure. Dans ce cas, le dispositif de montage du volet roulant comprend deux glissières verticales, disposées en vis-à-vis sur les côtés de l'embrasure et ayant chacune un logement ouvert vers le haut, ainsi que deux pattes de fixation, solidaires d'une partie fixe du volet roulant et aptes à être respectivement introduites dans les logements des glissières par leurs extrémités supérieures ouvertes pour placer le volet roulant en haut de l'embrasure, au-dessus des glissières ; le dispositif comporte, en outre, deux pièces de liaison selon l'invention, respectivement aptes à être fixées aux pattes par les moyens de fixation de leurs bases respectives, la longueur et/ou la largeur de la base de chaque pièce de liaison pouvant être modifiée par une déformation dudit au moins un côté déformable de telle sorte que ce côté, ainsi qu'un côté opposé soient chacun en appui contre une paroi du logement de la glissière dans laquelle la pièce est disposée.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 montre, en perspective, une pièce de liaison conforme à l'invention avant son montage sur la tête d'une patte, également représentée ;
- les figures 2 et 3 sont des vues en perspective de la pièce de liaison montée sur la tête de la patte, prises selon deux angles différents ;
- les figures 4 et 5 sont des vues en perspective de la pièce de liaison seule, selon deux angles différents ;
- la figure 6 montre, avant son montage aux extrémités hautes de deux glissières, un dispositif de volet roulant avec des pattes équipées de pièces de liaison conformes à l'invention ;
- la figure 7 montre, en perspective prise de côté, la tête d'une patte équipée d'une pièce de liaison conforme à l'invention sur le point d'être insérée dans un logement ménagé à l'extrémité haute d'une glissière ; et
- la figure 8 montre, en coupe verticale, la tête d'une patte équipée d'une pièce de liaison conforme à l'invention, disposée dans ce logement d'une glissière.

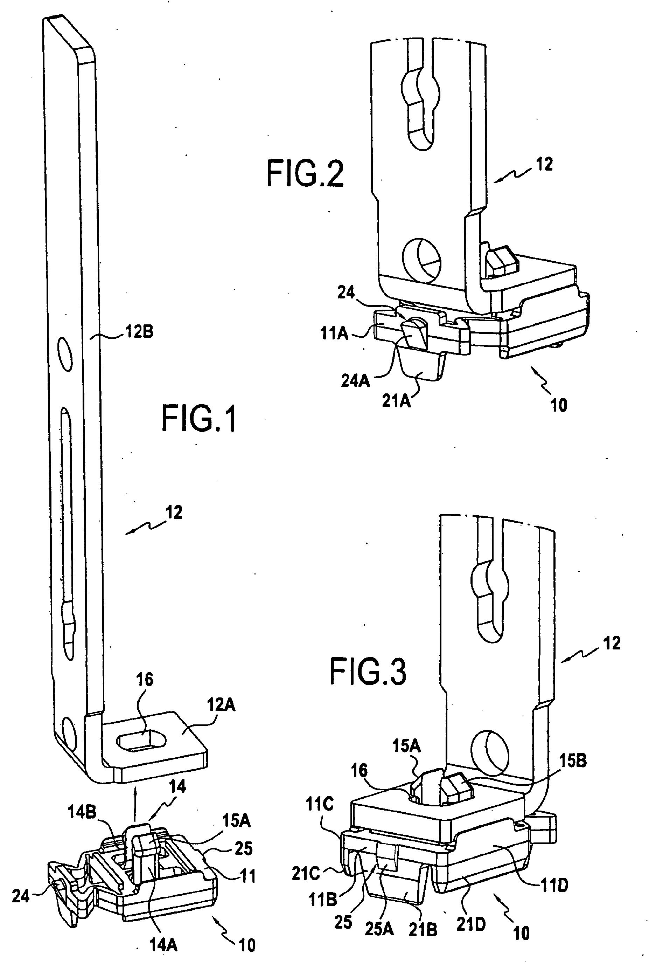

Sur la figure 1, la pièce de liaison 10 est représentée avant sa fixation sur la tête 12A d'une patte 12. En l'espèce, cette patte a sensiblement une forme en équerre, sa tête 12A étant repliée à angle droit par rapport à son bras principal 12B.

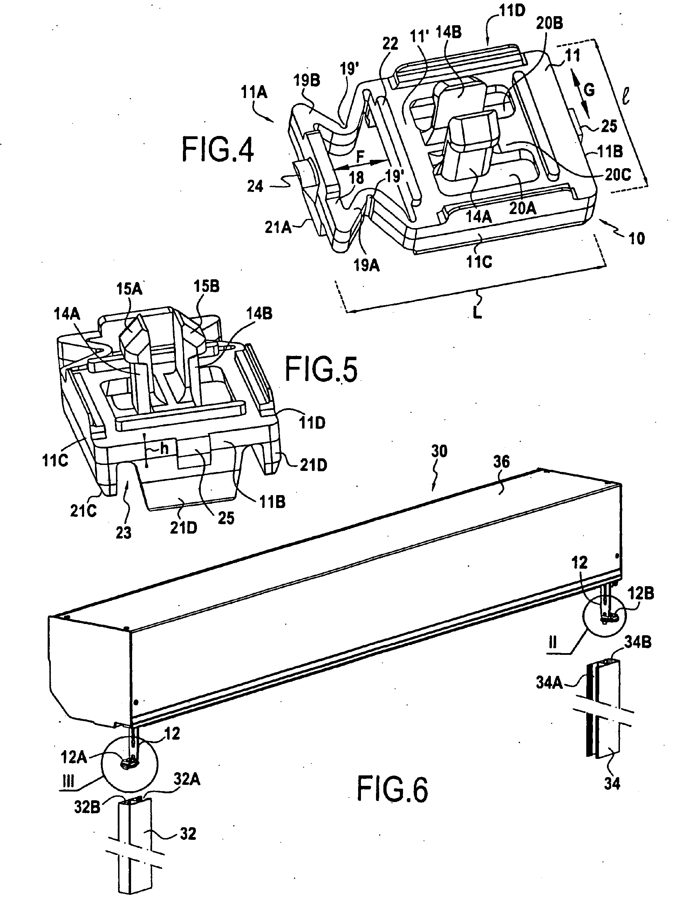

La pièce de liaison 10 comporte une base 11, sur une des faces de laquelle une agrafe 14 fait saillie, pour fixer la pièce 10 à la patte 12 par encliquetage de cette agrafe 14 dans un perçage 16 de la tête 12A de la patte. En l'espèce, comme on le voit mieux sur les figures 4 et 5, l'agrafe 14 est conformée sensiblement en U et comprend deux branches, respectivement 14A et 14B parallèles, aptes à être élastiquement rapprochées l'une de l'autre pour permettre l'encliquetage, chacune de ces branches ayant un renflement terminal, respectivement 15A, 15B en saillie sur l'extérieur de la patte, pour s'accrocher sur le bord de l'ouverture 16. Pour favoriser l'insertion de l'agrafe dans cette ouverture, les renflements 15A et 15B ont des chanfreins formant rampe opposés à la base 11.

Sur les figures 2 et 3, la pièce de liaison 10 est fixée à la patte 12 et l'on voit que les renflements précités sont accrochés sur les bords de l'ouverture 16.

Selon l'invention, au moins un côté de la base 11 de la pièce 10 est élastiquement déformable pour faire varier la longueur et/ou la largeur de cette base. En l'espèce, comme on le voit mieux sur la figure 4, la base 11 présente un côté déformable 11A, comprenant une barrette externe 18 reliée au corps de la base par une liaison pliable. En l'espèce, la barrette 18 est reliée au corps 11' de la base 11 par deux côtés de liaison en V, respectivement 19A et 19B, les pointes des V étant tournées l'une vers l'autre. Ainsi, par rapprochement ou écartement des branches des V 19A et 19B, la barrette 18 peut se déplacer par rapport au corps de la base dans le sens de la double flèche F, de manière à augmenter ou à diminuer la longueur L de la pièce de liaison 10. Pour favoriser le pliage des liaisons en V 19A et 19B, le fond 19' de ces V est légèrement évidé.

On voit, en particulier sur les figures 4 et 5, que le corps 11' de la base 11 présente en outre des lumières respectives, 20A et 20B, qui longent ses côtés opposés, respectivement 11C et 11D. Les côtés 11C et 11D sont orientés sensiblement perpendiculairement à la barrette 18 précitée et s'étendent donc sensiblement parallèlement à la longueur L de la base.

Grâce aux lumières 20A et 20B, les côtés 11C et 11D sont déformables, comme indiqué par la double flèche G, de sorte que la pièce de liaison est légèrement flexible dans le sens de sa largeur I.

Les lumières 20A et 20B sont séparées l'une de l'autre par un élément de paroi centrale 20C, dont est solidaire l'agrafe 14 précitée. En l'espèce, le dernier côté 11B du corps 11' n'est pas particulièrement déformable. Toutefois, bien entendu, il pourrait être également longé par une lumière orientée perpendiculairement aux lumières 20A et 20B précitées, pour accroître sa flexibilité. Ceci est rarement nécessaire, compte tenu de ce que la barrette 18, avec ses liaisons pliables 19A et 19B, permet en général une déformabilité suffisante. Globalement, les côtés 11A, 11B, 11C et 11D délimitent un rectangle, légèrement flexible dans le sens de sa largeur I (surtout dans les régions centrales des côtés 11C et 11D), et déformable élastiquement dans le sens de sa longueur L, qui peut donc augmenter ou diminuer pour s'adapter à la longueur de la section du logement recevant la pièce de liaison.

Le corps 11' de la base peut présenter une ou plusieurs nervures 22, qui servent en particulier à accroître localement sa résistance mécanique. Par ailleurs, au moins un des côtés de cette base présente avantageusement une crête augmentant la hauteur de ce côté. En l'espèce, c'est le cas pour chacun des côtés de la base, et on a identifié sur les figures, les crêtes 21A, 21B, 21C et 21D qui équipent respectivement chacun des côtés 11A, 11B, 11C et 11D de la base 11.

S'agissant des côtés 11A, 11C et 11D, on remarque que les crêtes s'étendent sur chacune des deux faces opposées de la base. Ainsi, à partir de la hauteur nominale H de la base, sa hauteur est augmentée dans un sens ou dans deux sens par la présence des crêtes. Les crêtes de deux côtés adjacents sont séparées par des interruptions comme l'interruption 23, permettant une flexibilité des côtés.

Grâce aux moyens précédemment évoqués (barrette 18 et ses côtés de liaison pliables et/ou lumières 20A, 20B), la base est déformable dans le sens de sa longueur L et/ou de sa largeur I. La faible hauteur nominale h du corps 11' de la base 11, qu'il présente notamment dans les régions des côtés où les interruptions 23 sont constatées, ainsi que dans la région de la paroi de liaison 20C, en fait une pièce très légère et très aisée à manipuler. La hauteur augmentée de cette base du fait de la présence des crêtes précédemment évoquées lui permet de reposer de manière stable contre les parois du logement, une fois qu'elle est insérée dans ce dernier, pour éviter les tendances au basculement par rapport à ces parois, contre lesquelles, du fait de leur flexibilité, les côtés de cette base sont également repoussés.

Avantageusement, la pièce de liaison selon l'invention présente au moins un ergot apte à coopérer par encliquetage avec un creux formé dans une paroi du logement dans lequel la tête de la patte 12, portant la base 11 est destinée à être insérée. Ceci permet de caler la patte par rapport au logement dans la direction d'insertion de cette patte dans ce logement.

On constate en particulier sur les figures 2 et 4 que la barrette 18 présente un ergot 24 en saillie externe et que le côté 11B de la base 11 opposé à la barrette présente un ergot 25, également en saillie externe.

En l'espèce, les ergots 24 et 25 présentent chacun une face frontale 24A, respectivement 25A conformée en rampe, évitant qu'ils ne s'opposent à l'insertion de la base dans le logement. Une fois inséré dans le creux précité, ils permettent donc essentiellement de s'opposer à une extraction de la patte en dehors du logement, dans le sens opposé à la direction d'insertion.

La patte étant par ailleurs calée transversalement au logement, par la déformabilité de l'un au moins des côtés de la pièce de liaison 10, elle se trouve ainsi finalement parfaitement positionnée.

Sur la figure 6, on a représenté schématiquement un volet roulant 30 avant son montage aux extrémités de deux glissières verticales, respectivement 32 et 34. En l'espèce, seul le coffrage extérieur 36 du volet roulant est représenté, étant entendu que ce volet roulant comporte les composants habituels, à savoir, en particulier, un tablier, un axe de rotation, et des paliers de support. Le tablier est formé de plusieurs lames dont les extrémités latérales sont destinées, lors des mouvements de descente et de remontée du volet roulant, à coulisser dans des gorges verticales respectivement 32A et 34A des glissières 32 et 34 qui se font face.

En effet, la section transversale de chaque glissière présente une partie de bord ayant un contour en U qui forme l'une des gorges 32A, 34A précitées et une partie de fond ayant un contour fermé, qui délimite un logement 32B, 34B.

A chaque extrémité du volet roulant est prévue une patte 12 du type décrit précédemment. Plus précisément, chaque patte 12 est solidaire d'une partie fixe du volet roulant. En l'espèce, les pattes peuvent être directement fixées aux deux paliers qui portent l'axe de rotation du volet, ou bien, si celui-ci est suffisamment résistant, au coffrage du volet roulant, particulièrement à l'une de ses joues ou à sa paroi de fond. A cet égard, il est souligné que le bras principal des pattes présente des ouvertures permettant sa fixation par vissage ou analogue. En tout état de cause, la fixation est telle que les têtes des pattes font saillie vers le bas par rapport au volet roulant pour pouvoir être insérées dans les logements 32B, 34B ouverts sur le haut des glissières 32 et 34. En l'espèce, les pattes 12 sont fixées au volet roulant de telle sorte que leurs têtes respectives 12A soient tournées à l'opposé l'une de l'autre.

Une pièce de liaison 10 conforme à l'invention est fixée à la tête 12A de chacune de ces pattes.

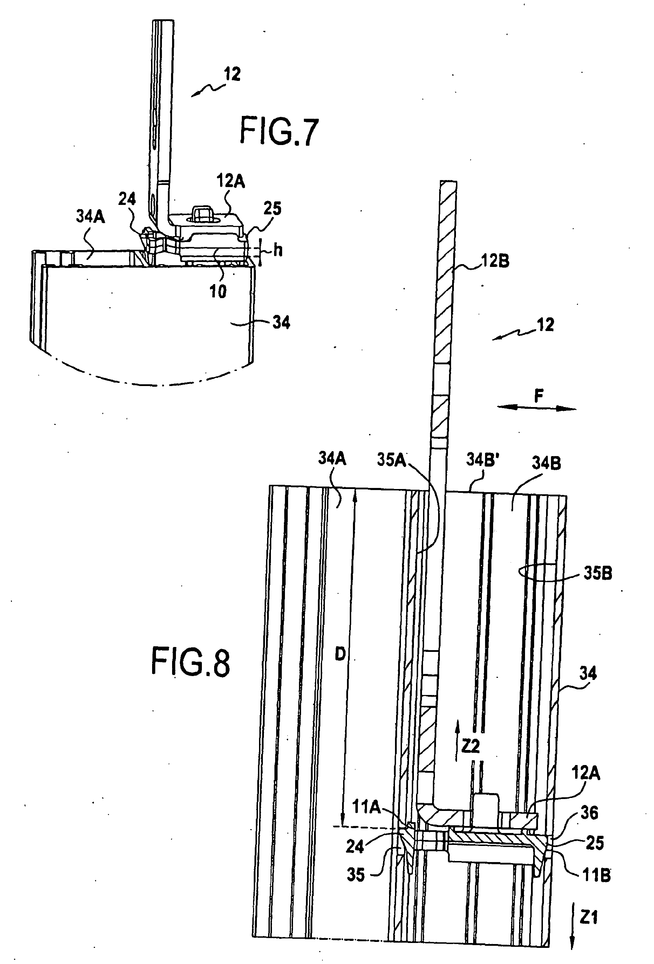

Sur la figure 7, est représentée la situation avant l'insertion de la tête de la patte équipée de la pièce 10 dans le logement de la glissière 34. On comprend sur cette figure que, par convention, la direction de la hauteur h de la base de la pièce 10 est parallèle à la direction d'insertion de la patte dans le logement, tandis que les directions de la longueur et de la largeur sont perpendiculaires à cette hauteur.

Sur la figure 8, la patte a été insérée dans la direction Z1 à l'intérieur du logement 34B sur une distance suffisante pour que les ergots 24 et 25 atteignent respectivement un creux 35 et un creux 36 dans la paroi du logement, creux dans lesquels ces ergots s'insèrent par encliquetage pour prévenir une extraction de la patte dans la direction Z2 opposée à la direction Z1. On comprend également sur cette figure 8 que les côtés opposés, 11A et 11B de la base 11 de la pièce de liaison 10 sont en appui contre, respectivement, la paroi 35A du logement équipée du creux 35 et la paroi opposée 35B équipée du creux 36. Ainsi, la pièce de liaison 10 et la patte 12 sont calées dans la direction horizontale représentée par la double flèche F. Dans l'application particulière de l'invention au montage de volets roulants, la direction Z1 est verticale vers le bas et la direction Z2 est verticale vers le haut.

On comprend que la tête 12A de chaque patte 12 est destinée à être orientée transversalement à la direction longitudinale de la glissière lorsque cette patte est en place dans le logement de cette glissière. On voit en effet sur la figure 8 que la tête 12A est sensiblement horizontale tandis que le long bras 12B de la pièce 12 est vertical. Les creux 35 et 36 de la paroi du logement sont disposés à une distance D déterminée par rapport à l'ouverture 34B' de ce logement, de sorte que la distance d'insertion de la patte dans le logement est déterminée.

## Revendications

1. Pièce de liaison (10) pour le positionnement d'une patte (12) dans un logement, comportant une base (11) ainsi que des moyens de fixation (14) de la base avec la tête (12A) de la patte (12), **caractérisée en ce qu'** au moins un côté (11A, 11C, 11D) de la base (11) est élastiquement déformable pour faire varier la longueur (L) et/ou la largeur (I) de ladite base.

2. Pièce selon la revendication 1, **caractérisée en ce que** les moyens de fixation comprennent une agrafe (14) faisant saillie sur une des faces de la base (11) et apte à coopérer par encliquetage avec un perçage (16) de la tête (12A).

3. Pièce selon la revendication 1 ou 2, **caractérisée en ce que** la base (11) présente un côté déformable (11A) comprenant une barrette externe (18) reliée au corps de la base par au moins une liaison pliable.

4. Pièce selon la revendication 3, **caractérisée en ce que** la barrette externe (18) est reliée au corps de la base (11) par deux côtés de liaison en V (19A, 19B), les pointes des V étant tournées l'une vers l'autre.

5. Pièce selon la revendication 3 ou 4, **caractérisée en ce qu'**elle présente au moins un ergot (24, 25) apte à coopérer par encliquetage avec un creux (35, 36) formé dans une paroi du logement.

6. Pièce selon l'une quelconque des revendications 1 à 5, **caractérisée en ce que** la base (11) présente au moins une lumière (20A, 20B) longeant l'un de ses côtés (11C, 11D).

7. Pièce selon l'une quelconque des revendications 1 à 6, **caractérisé en ce que** au moins un côté (11A, 11B, 11C, 11D) de la base présente une crête (21A, 21B, 21C, 21D) augmentant la hauteur de ce côté.

8. Pièce selon l'une quelconque des revendications 1 à 7, **caractérisée en ce qu'**elle est réalisée en une seule pièce, par injection de matière plastique.

9. Dispositif de montage d'un objet à l'entrée d'un logement (32B, 34B), comprenant une patte (12), solidaire dudit objet et apte à être insérée dans le logement, **caractérisé en ce qu'**il comporte, en outre, une pièce de liaison (10) selon l'une quelconque des revendications 1 à 8, apte à être fixée à la patte (12) par les moyens (14) de fixation de sa base (11), la longueur et/ou la largeur de ladite base pouvant être modifiée par une déformation dudit au moins un côté déformable de telle sorte que ce côté, ainsi qu'un côté opposé soient chacun en appui contre une paroi du logement.

10. Dispositif de montage d'un volet roulant dans une embrasure, comprenant deux glissières verticales (32, 34), disposées en vis-à-vis sur les côtés de l'embrasure et ayant chacune un logement (32B, 34B) ouvert vers le haut, ainsi que deux pattes de fixation (12), solidaires d'une partie fixe du volet roulant et aptes à être respectivement introduites dans les logements (32B, 34B) des glissières (32, 34) par leurs extrémités supérieures ouvertes pour placer le volet roulant en haut de l'embrasure, au-dessus des glissières, **caractérisé en ce qu'**il comporte, en outre, deux pièces de liaison (10) selon l'une quelconque des revendications 1 à 8, respectivement aptes à être fixées aux pattes (12) par les moyens de fixation (14) de leurs bases respectives (11), la longueur (L) et/ou la largeur (I) de la base (11) de chaque pièce de liaison (10) pouvant être modifiée par une déformation dudit au moins un côté déformable (11A, 11C, 11D) de telle sorte que ce côté, ainsi qu'un côté opposé soient chacun en appui contre une paroi du logement (32B, 34B) de la glissière dans laquelle la pièce est disposée.

11. Dispositif selon la revendication 10, comprenant deux pièces de liaison selon l'une quelconque des revendications 2 à 8, **caractérisé en ce que** chaque patte (12) comprend une tête (12A) destinée à être orientée transversalement à la direction longitudinale de la glissière (32, 34), ladite tête (2A) présentant un perçage (16) dans lequel l'agrafe (14) de l'une des pièces de liaison peut être insérée et retenue par encliquetage.

12. Dispositif selon la revendication 10 ou 11, comprenant deux pièces de liaison selon la revendication 5 et l'une quelconque des revendications 1 à 8, **caractérisé en ce que** le logement (32B, 34B) de chaque glissière (32, 34) présente, à une distance déterminée de son ouverture, un creux (35) destiné à recevoir le ou les ergots (24, 25) d'une pièce de liaison (10).

13. Dispositif selon l'une quelconque des revendications 10 à 12, **caractérisé en ce que** la section transversale de chaque glissière (32, 34) présente une partie de fond, ayant un contour fermé délimitant ledit logement (32B, 34B), et une partie de bord ayant un contour en U formant une gorge (32A, 34A) dans laquelle un bord latéral du tablier du volet roulant peut être introduit.

## Claims

1. Linking part (10) for positioning a tab (12) in a housing, comprising a base (11) as well as attachment means (14) of the base with the head (12A) of the tab (12), **characterized in that** at least a side (11A, 11C, 11D) of the base (11) can be elastically distorted to vary the length (L) and/or the width (1) of said base.

2. Part according to claim 1, **characterized in that** the attachment means comprise a staple (14) projecting from one of the faces of the base (11) and suitable to cooperate by means of a ratchet mechanism with a hole (16) of the head (12A).

3. Part according to claim 1 or 2, **characterized in that** the base (11) has a side (11A) that can be distorted, comprising an outer bar (18) connected to the body of the base by at least a foldable link.

4. Part according to claim 3, **characterized in that** the outer bar (18) is connected to the body of the base (11) by two V-shaped linking sides (19A, 19B), the tips of the V being turned towards each other.

5. Part according to claim 3 or 4, **characterized in that** it has at least one lug (24, 25) suitable to cooperate in a latching-like manner with a hollow (35, 36) formed in a wall of the housing.

6. Part according to any one of the claims 1 to 5, **characterized in that** the base (11) has at least a hole (20A, 20B) along one of its sides (11C, 11D).

7. Part according to any one of the claims 1 to 6, **characterized in that** at least one side (11A, 11B, 11C, 11D) of the base has a ridge (21A, 21B, 21C, 21D) increasing the height of this side.

8. Part according to any one of the claims 1 to 7, **characterized in that** it is made in one piece, by injection of plastics.

9. Mounting device of an object at the inlet of a housing (32B, 34B), comprising a tab (12) secured to said object and suitable to be inserted in the housing, **characterized in that** it further comprises a linking part (10) according to any one of claims 1 to 8, suitable to be attached to the tab (12) by the attachment means (14) of its base (11), the length and/or the width of said base being able to be altered by a distortion of said at least one side that can be distorted so that this side as well as an opposite side are each supported by a wall of the housing.

10. Mounting device of a roller blind in a window recess, comprising two vertical slides (32, 34) arranged to be facing each other on the sides of the window recess and having each a housing (32B, 34B) open upwards, and two attachment tabs (12) secured to a fixed part of the roller blind and suitable to be respectively inserted in the housings (32B, 34B) of the slides (32, 34) by their upper open ends to place the roller blind at the top of the window recess, above the slides, **characterized in that** it further comprises two linking parts (10) according to any one of claims 1 to 8, respectively suitable to be attached to the tabs (12) by the attachment means (14) of their respective bases (11), the length (L) and/or the width (1) of the base (11) of each linking part (10) being able to be altered by a distortion of said at least one side that can be distorted (11A, 11C, 11D) so that this side as well as an opposite side, are each supported by a wall of the housing (32B, 34B) of the slide in which the part is arranged.

11. Device according to claim 10, comprising two linking parts according to any one of claims 2 to 8, **characterized in that** each tab (12) comprises a head (12A) to be directed transversally to the longitudinal direction of the slide (32, 34), said head (2A) having a hole (16) in which the staple (14) of one of the linking parts can be inserted and retained by means of a ratchet mechanism.

12. Device according to claim 10 or 11, comprising two linking parts according to claim 5 and any one of the claims 1 to 8, **characterized in that** the housing (32B, 34B) of each slide (32, 34) has, at a determined distance of its opening, a hollow (35) to be used to receive the lug or the lugs (24, 25) of a linking part (10).

13. Device according to any one of the claims 10 to 12, **characterized in that** the cross section of each slide (32, 34) has a bottom portion, comprising a closed contour circumscribing said housing (32B, 34B), and an edge portion having a U-shaped contour forming a groove (32A, 34A) in which a side edge of the apron of the roller blind can be inserted.

## Patentansprüche

1. Verbindungsteil (10) für die Positionierung einer Lasche (12) in einer Aufnahme, umfassend einen Sockel (11) sowie Mittel (14) zum Befestigen des Sockels an dem Kopf (12A) der Lasche (12), **dadurch gekennzeichnet, daß** wenigstens eine Seite (11A, 11C, 11D) des Sockels (11) elastisch verformbar ist, um die Länge (L) und//oder die Breite (1) des Sockels zu verändern.

2. Teil nach Anspruch 1, **dadurch gekennzeichnet, daß** die Befestigungsmittel eine Klammer (14) umfassen, die an einer der Seiten des Sockels (11) vorspringt und geeignet ist, mit einer Bohrung (16) des Kopfes (12A) einrastend zusammenzuwirken.

3. Teil nach Anspruch 1 oder 2, **dadurch gekennzeichnet, daß** der Sockel (11) eine verformbare Seite (11A) aufweist, die einen Außensteg (18) umfaßt, der durch wenigstens eine biegbare Verbindung mit dem Körper des Sockels verbunden ist.

4. Teil nach Anspruch 3, **dadurch gekennzeichnet, daß** der Außensteg (18) durch zwei V-förmige Verbindungsseiten (19A, 19B) mit dem Körper des Sockels (11) verbunden ist, wobei die Spitzen der V einander zugewandt sind.

5. Teil nach Anspruch 3 oder 4, **dadurch gekennzeichnet, daß** es wenigstens einen Vorsprung (24, 25) aufweist, der geeignet ist, mit einer in einer Wand der Aufnahme ausgebildeten Vertiefung (35, 36) einrastend zusammenzuwirken.

6. Teil nach einem der Ansprüche 1 bis 5, **dadurch gekennzeichnet, daß** der Sockel (11) wenigstens eine Öffnung (20A, 20B) aufweist, die sich entlang einer seiner Seiten (11 C, 11D) erstreckt.

7. Teil nach einem der Ansprüche 1 bis 6, **dadurch gekennzeichnet, daß** wenigstens eine Seite (11A, 11B, 11C, 11D) des Sockels einen Kamm (21 A, 21 B, 21C, 21D) aufweist, der die Höhe dieser Seite vergrößert.

8. Teil nach einem der Ansprüche 1 bis 7, **dadurch gekennzeichnet, daß** es einstückig durch Kunststoffspritzen hergestellt ist.

9. Vorrichtung zur Montage eines Gegenstandes am Eingang einer Aufnahme (32B, 34B), umfassend eines Lasche (12), die mit dem Gegenstand fest verbunden und geeignet ist, in die Aufnahme eingesteckt zu werden, **dadurch gekennzeichnet, daß** sie ferner ein Verbindungsteil (10) nach einem der Ansprüche 1 bis 8 umfaßt, das geeignet ist, durch die Mittel (14) zur Befestigung seines Sockels (11) an der Lasche (12) befestigt zu werden, wobei die Länge und/oder die Breite des Sockels durch eine Verformung der wenigstens einen verformbaren Seite derart verändert werden kann, daß diese Seite sowie eine gegenüberliegende Seite jeweils an einer Wand der Aufnahme in Anlage sind.

10. Vorrichtung zur Montage eines Rolladens in einer Fenster- oder Türöffnung, umfassend zwei vertikale Gleitschienen (32, 34), die einander gegenüberliegend an den Seiten der Öffnung angeordnet sind und jeweils eine nach oben offene Aufnahme (32B, 34B) aufweisen, sowie zwei Befestigungslaschen (12), die mit einem festen Teil des Rolladens fest verbunden und geeignet sind, jeweils in die Aufnahmen (32B, 34B) der Gleitschienen (32, 34) über ihre offenen oberen Enden eingesteckt zu werden, um den Rolladen am oberen Teil der Öffnung, oberhalb der Gleitschienen zu plazieren, **dadurch gekennzeichnet, daß** sie ferner zwei Verbindungsteile (10) nach einem der Ansprüche 1 bis 8 umfaßt, die jeweils geeignet sind, durch die Mittel (14) zur Befestigung ihrer jeweiligen Sockel (11) an den Laschen (12) befestigt zu werden, wobei die Länge (L) und/oder die Breite (I) des Sockels (11) jedes Verbindungsteils (10) durch eine Verformung der wenigstens einen verformbaren Seite (11A, 11C, 11D) derart verändert werden kann, daß diese Seite sowie eine gegenüberliegende Seite jeweils an einer Wand der Aufnahme (32B, 34B) der Gleitschiene, in der das Teil angeordnet ist, in Anlage sind.

11. Vorrichtung nach Anspruch 10, mit zwei Verbindungsteilen nach einem der Ansprüche 2 bis 8, **dadurch gekennzeichnet, daß** jede Lasche (12) einen Kopf (12A) aufweist, der dazu bestimmt ist, quer zur Längsrichtung der Gleitschiene (32, 34) ausgerichtet zu werden, wobei der Kopf (12A) eine Bohrung (16) aufweist, in welche die Klammer (14) von einem der Verbindungsteile eingesteckt und durch Einrasten gehalten werden kann.

12. Vorrichtung nach Anspruch 10 oder 11, mit zwei Verbindungsteilen nach Anspruch 5 und einem der Ansprüche 1 bis 8, **dadurch gekennzeichnet, daß** die Aufnahme (32B, 34B) jeder Gleitschiene (32, 34) in einem bestimmten Abstand von ihrer Öffnung eine Vertiefung (35) aufweist, die dazu bestimmt ist, den Vorsprung oder die Vorsprünge (24, 25) eines Verbindungsteils (10) aufzunehmen.

13. Vorrichtung nach einem der Ansprüche 10 bis 12, **dadurch gekennzeichnet, daß** der Querschnitt jeder Gleitschiene (32, 34) einen Bodenteil mit einer die Aufnahme (32B, 34B) begrenzenden geschlossenen Kontur sowie einen Randteil mit einer U-förmigen Kontur aufweist, die eine Nut (32A, 34A) bildet, in die ein Seitenrand des Panzers des Rolladens eingeführt werden kann.
